# EUROPEAN PATENT SPECIFICATION

(11) **EP 0 983 667 B1**
(45) Date of publication and mention of the grant of the patent: **29.08.2007**
(21) Application number: 97927702.7
(22) Date of filing: 22.05.1997
(51) Int. Cl.: H04L 12/56

(54) **SYSTEM AND METHOD FOR EQUALIZING DELAY IN A DYNAMIC PACKET SWITCHING NETWORK**
SYSTEM UND VERFAHREN ZUM LAUFZEITAUSGLEICH IN EINEM DYNAMISCHEN PAKETVERMITTELTEN NETZ
SYSTEME ET PROCEDE POUR COMPENSER LE TEMPS DE PROPAGATION DANS UN RESEAU DYNAMIQUE DE COMMUTATION DE PAQUETS

(43) Date of publication of application: 08.03.2000
(73) Proprietor: Telcordia Technologies, Inc., Morristown, NJ 07960 (US)
(72) Inventor: CISNEROS, Arturo, Lincroft, NJ 07738 (US)
(74) Representative: Poulin, Gérard
(86) International application number: PCT/US1997/008688
(87) International publication number: WO 1998/053577

(56) References cited:
- WO-A-95/22233
- WO-A-95/23471
- WO-A-95/24085
- US-A- 4 817 085
- US-A- 5 193 151
- US-A- 5 381 404
- US-A- 5 381 408
- US-A- 5 400 324
- US-A- 5 457 678
- US-A- 5 627 822

## Description

### BACKGROUND OF THE INVENTION

### Field of the Invention

The present invention relates generally to routing and transferring data and, in particular, to a system and method for equalizing delay in a dynamic packet switching network that routes and transfers data in addressed packets.

### Description of the Related Art

Telecommunication networks exist that interconnect large numbers of user stations using telecommunication facilities. These networks utilize transmission systems, switching systems, and station equipment to transmit voice, video, and data between two points. The physical circuits between two points in the network are referred to as links, and the points of junction of the links are referred to as nodes. The user stations in data transmission networks may be telephones, terminals, printers, facsimile units, computers, and the like.

Packet switching networks were designed to provide a more efficient method of transferring data over networks. However, packet switching networks can also be used to transmit digitized voice. A network that uses packet switching as a means of transmitting data is commonly referred to as a packet switching data network (PSDN).

A packet is a discrete unit of a data message that is routed individually over a PSDN. Each packet contains control information that enables the message to be reassembled in proper sequence before it reaches its final destination. Packet switching is efficient because packets occupy the channel or path through the network only for the brief time they are in transit, in contrast to a circuit-switched message, which requires the use of the transmission line for the duration of the message. On completion of the data transmission, the channel or path is made available for transfer of other packets. The transmission lines through the PSDN are supplemented with computerized switches that control traffic routing and flow. A standard feature of packet switching is automatic error detection and correction of transmitted packets.

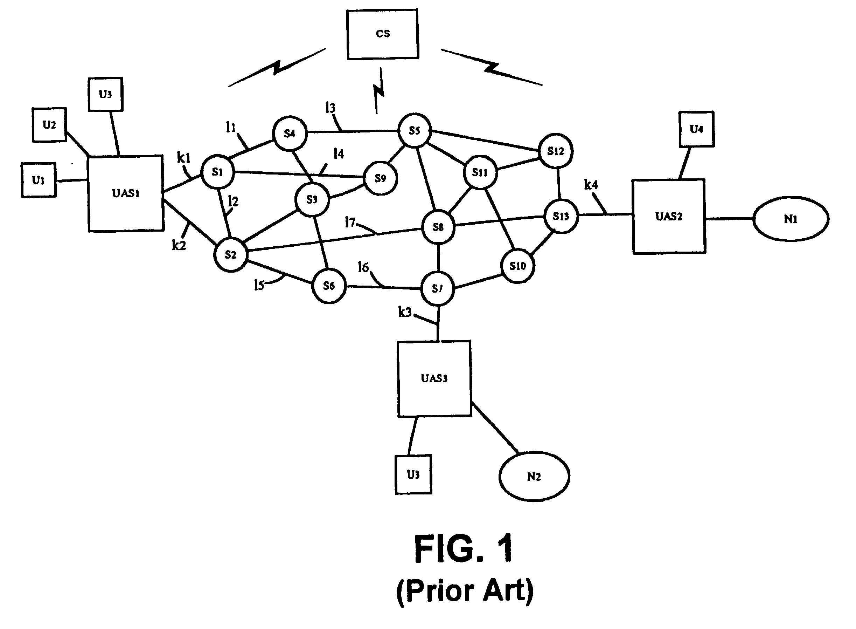

A conventional communications network using data packet switching is shown diagrammatically in Fig. 1. Users and other networks access this network through user access stations ("UAS"), shown, for example, in Fig. 1 as UAS₁, UAS₂, and UAS₃. Other networks N₁, N₂ are considered to be like other users. User access stations send user data to the network and receive user data from the network through one or more switches Sⱼ. Paths are established through the network of switches Sⱼ in order to set up virtual communication channels between users on different user access stations. The transmissions delay for a data packet to go from one UAS to another UAS depends on the particular path chosen.

A typical transmission delay time through the network will be referred to as T. For example, T could be 20 milliseconds. The longest path chosen for a virtual connection through the network in a typical case has a transmission delay of 10T. For example, for T = 20 milliseconds, 10T = 200 milliseconds.

Data packet size need not be constant. Data packet size can be fixed, as it is in ATM networks. However, it must be no longer than a maximum length. The maximum packet length is such that the latency time to transmit the packet over any of the links kᵢ or l_{y} is smaller than T/10. The links kᵢ are those connecting the user access stations to the switches, and the links l_{y} are those connecting switches to other switches.

Some packet switching data networks are dynamic in a number of ways, for example, a network of packet switches on satellites in non-earth synchronous orbits. The communication links kᵢ between the user access stations UAS and the switches Sⱼ are not permanent. Links kᵢ are alive for a typical period of time of about 15,OOOT (for example, 5 minutes for T = 20 milliseconds). When old links kᵢ are removed, new ones are established, but the new links kᵢ are almost always established on a new switch Sⱼ. For example, when link k₂ (Fig. 1) is removed a new link between UAS₁ and S₂ may be established. There is always at least one link between a UAS and a network switch Sⱼ.

The links ly between switches Sⱼ are not permanent; they have typical lifetimes of about 30,000T (for example, 10 minutes for T = 20 milliseconds). However, the pattern of links must satisfy certain conditions. There are always enough links to allow any UAS to communicate to any other UAS. Some of the links kᵢ or ly may be permanent or much longer lived than stated above.

In a typical system, there are control stations CS having communication links to the network switches Sⱼ. Their function is to control the network and to set up and tear down virtual connections. Any user access station UAS can always communicate with at least one control station CS. The location of the control stations CS are not germane to the present invention. It will be assumed that the network interconnection pattern (links kᵢ and ly) is predictable and can be computed by the control stations CS for any future time. In practice, all that is needed is the ability to compute the pattern into the future for the duration of the longest virtual connection established at the present time. Malfunctions can affect the predictability, but there exist ways of handling malfunctions.

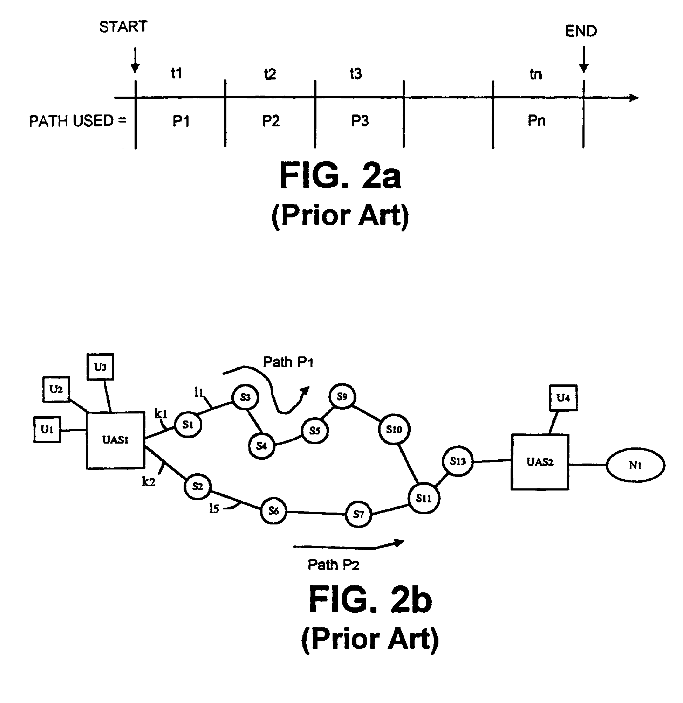

A virtual connection between two network users that lasts longer than the link lifetimes must take different paths through the network during the connection lifetime. It will be assumed that the dynamic interconnection pattern (links kᵢ and l_{y}) is such that a series of paths can be chosen for the duration of the virtual connection, and each path can be used for at least a time period 1,200T (for example, 4 minutes for T = 20 milliseconds). This is, of course, as in any other kind of network, assuming bandwidth availability. If there is not enough bandwidth available, the connection cannot be set up. Resources are reserved for the expected duration of the call. As shown in Fig. 2a, for each of a series of consecutive time intervals t₁, t₂, t₃, ..., to there are corresponding paths P₁, P₂, P₃, ... Pₙ, such that path Pᵢ is used during time interval tᵢ for the virtual connection.

Referring to Fig. 2b, a first path P₁, goes through switches S₁, S₃, S₄, S₅, S₉, S₁₀, S₁₁**,** and S₁₃, while a second path P₂ goes through switches S₂, S₆, S₇, S₁₁, and S₁₃. For the same virtual connection between UAS₁ and UAS₂, path P₁ is used during time interval t₁, and path P₂ is used during time interval t₂, and so forth.

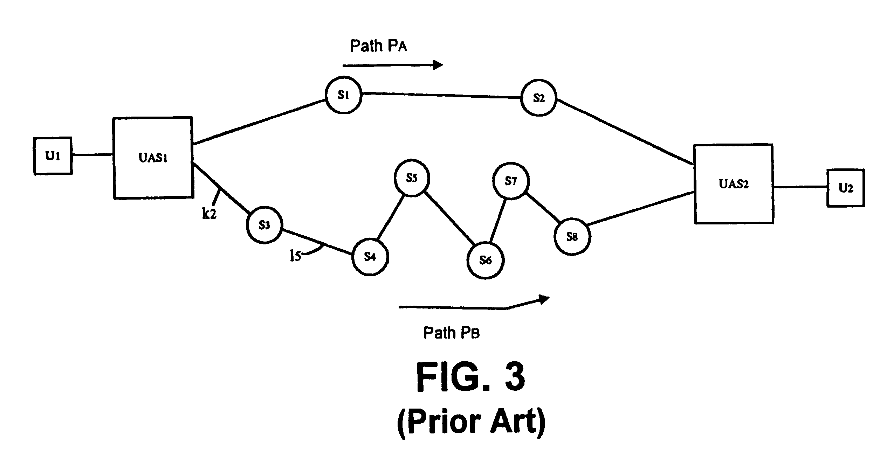

Problems are caused by the changes in paths through the network used by one virtual connection. As shown in Fig. 3, a virtual connection is set up between user U₁ on UAS₁ and user U₂ on UAS₂. During the first time interval t₁, path P_{A} is used. During the second time interval t₂, path P_{B} is used. Path P_{A} has a transmission delay time from UAS₁ to UAS₂ equal to tₐ, while path P_{B} has a transmission delay time from UAS₁ to UAS₂ equal to t_{b}. It should be noted that the transmission delay times tₐ and t_{b} are not intervals during which paths P_{A} and P_{B} are used, that is given by the intervals t, and t₂.

It will first be assumed that tₐ < t_{b} (for example, tₐ = 20 milliseconds and t_{b} = 100 milliseconds), and that there is no buffering at UAS₂. After the end of time interval t₁, the virtual connection uses path P_{B} instead of path P_{A}. The first data packet traveling along path P_{B} will arrive at UAS₂ a period of time t_{b} - t, later than it would have if it had gone on path P_{A}. This will leave a silent gap of duration t_{b} - tₐ in the data stream (for example, t_{b} - tₐ = 80 milliseconds) which is too large to be acceptable for many communication services. This problem is simple to correct, however changing from a longer path P_{B} to a shorter path P_{A} causes more difficult problems, as explained below.

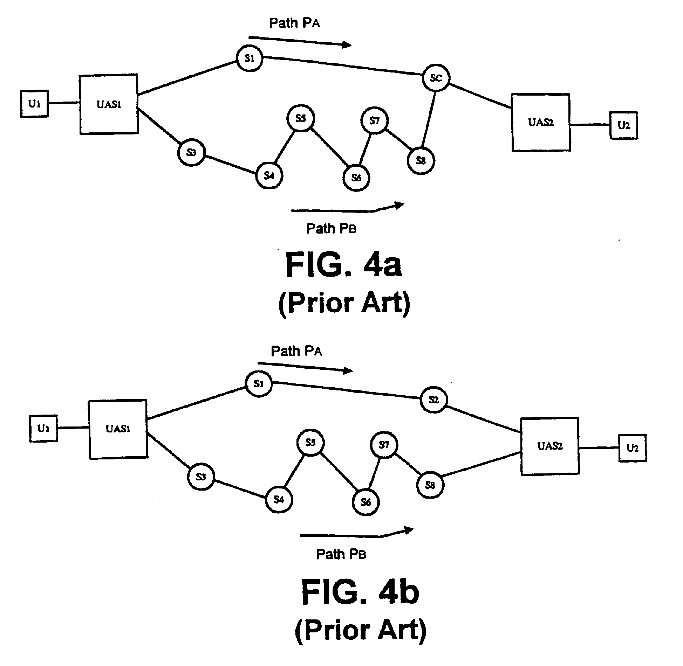

It will now be assumed that during the first time interval t₁, path P_{B} is used, and during the second time interval t₂, path P_{A} is used (see Figs. 4a and 4b). Again, tₐ is the transmission delay along path P_{A}, and t_{b} is the transmission delay along path P_{B}, and tₐ < t_{b}. There is no buffering at UAS₂ or at UAS₁.

Now assume that paths P_{A} and P_{B} have a common switch S_{c}, as shown in Fig. 4a. At the end of the time interval t₁, the connection will be changed from path P_{B} to path P_{A}. When a data packet first arrives at switch S_{c} along path P_{A} there are earlier data packets from the connection still traveling along path P_{B} (there is also an interpacket spacing time, but this is negligible for the problem described). There will be a period of time equal to t_{b} - tₐ during which switch S_{c} receives packets from the connection at twice the normal rate. If the link from switch S_{c} to UAS₂ is fully (or close to fully) utilized, switch S_{c} must buffer cells from this connection for a period much longer than t_{b} - tₐ. If left uncorrected, this will cause delay and possibly increase cell loss probabilities for other virtual connections (cell = data packet).

If paths P_{A} and P_{B} do not have a common switch, as shown in Fig. 4b, UAS₂ must maintain two links for a time interval t_{b} - tₐ, during which time it gets cells at twice the normal rate for the connection. This will also result in increased delay and increased cell loss probabilities for other virtual connections.

We will now consider three prior art documents:
- US 5,457,678 describes method and circuit arrangement for the transmission of message packets according to the asynchronous transfer mode in a communication network. Transmission of the message packets according to asynchronous transfer mode ensues separately on at least two completely different transmission paths having ATM switching equipments (ASW1......, ASW2......) or ATM cross connectors (ACC1..., ACC2). An acquisition of test message packets transmitted at the transmission side and switched on the different transmission paths ensues on the basis of an interface controller unit (CCU) located at a respective subscriber of the network. Compensation is provided of the differences in running time of the message packets caused by the different transmission paths on the basis of the reception points in time. One of a plurality of identical message packets transmitted on the different transmission paths is output to a subscriber.
- US 5,400,324 describes a method to provide link grouping in a packet switch. In a packet switch, which is intended for packets of constant length, and which, between switch ports, is divided into a number of nodes (12) and transmission links (14), where the nodes carry out space selection and the transmission links offer point-to-point transmission between the nodes, link grouping is carded out. More particularly, from multiple parallel physical links coming in the switch, link groups are produced, each in the form of a logical link with a bandwidth that is the sum of the bandwidths of the physical links included in the link group, said logical link being restored to outgoing parallel physical links from the switch. One or more link protocols (G1,G2) are used according to which a label in the packet's header is made to describe a route that holds together the grouped links through the entire switch such that bits in the label describing the route over a certain transmission link are the same for packets belonging to the same link group.
- US 5,627,822 describes method and circuit arrangement for disturbance-free redirection of a message cell stream onto an alternate route. Within a cell-oriented communication network, a switching equipment (CCa) located at the start of a path pair duplicates a message cell stream supplied thereto for redirection. The message cell streams resulting therefrom are separately supplied to a switching equipment (CCb) located at the end of the path pair via an active path (AP) and via an alternate path (EP) of the path pair allocated thereto. A decentralized synchronization means (SY) or, respectively, a plurality of decentralized synchronization means (SY1, SY2 or, respectively, SY3 SY4) is or, respectively are provided therein, a synchronization of the two message cell streams ensuing therein while initially forwarding the message cell stream of the active path. After such a synchronization, only the message cell stream of the alternate path is then forwarded.

### SUMMARY OF THE INVENTION

It is thus an object of the present invention to provide an improved system and method for routing and transferring data in addressed data packets which overcome the above-described problems in dynamic packet switching networks.

It is a further object of the present invention to provide a system and method for equalizing delay in a dynamic packet rate doubling upon changing transmission paths.

Additional objects, advantages and novel features of the invention will be set forth in the description that follows, and will become apparent to those skilled in the art upon reading this description or practicing the invention. The objects and advantages of the invention may be realized and attained by the appended independent claims 1 and 4.

To achieve the foregoing and other objects and in accordance with the purpose of the present invention, as embodied and broadly described herein; the apparatus of this invention comprises a system for equalizing delay in a dynamic packet switching network, comprising a buffer means for buffering a packet transmission through the network for equalizing packet transmission delay and for eliminating packet rate doubling upon changing transmission paths through the network.

It is preferred that the buffer means comprises a first buffer means for buffering a packet transmission at a receiving user access station for equalizing packet delay through the network upon changing from one transmission path to another transmission path. The buffer means also preferably comprises a second buffer means for buffering a packet transmission at a transmitting user access station for eliminating packet rate doubling when a change is made from a longer transmission path to a shorter transmission path through the network. A means for controlling the second buffer means provides a first amount of buffering at the transmitting user access station immediately upon changing from a longer transmission path to a shorter transmission path through the network, and means for gradually shifting the first amount of buffering from the second buffer means to the first buffer means during a period of time following the change from a longer transmission path to a shorter transmission path.

In a further aspect of the present invention, in accordance with its objects and purposes, the apparatus hereof comprises a dynamic packet switching network, comprising first and second user access stations each having at least one buffer to delay packet transmission, and a network of switches and communication links interconnecting the first and second user access stations. A control station having communication links to the switches and user access stations provides means for setting up and changing transmission paths between the first and second user access stations, and means for controlling the buffers in the first and second user access stations for equalizing packet transmission delay through the network for different transmission paths.

It is also preferred that the control station have means for controlling the buffers in the first and second user access stations for eliminating packet rate doubling when a change is made from a longer transmission path to a shorter transmission path through the network. The means for controlling the buffers in the first and second user access stations comprises means for causing the buffer in the second user access station to delay packets received from the first user access station for a sufficient time to cause a total transmission delay time for each transmission path equal to a transmission delay time of a longest one of the transmission paths.

It is also preferred that the means for controlling the buffers in the first and second user access stations comprises means for causing the buffer in the first user access station to delay packets transmitted from the first user access station to the second user access station for eliminating packet rate doubling when a change is made from a longer transmission path to a shorter transmission path. The means for controlling the buffers also preferably comprises means for gradually shifting the buffering provided by the buffer in the first user access station to the buffer in the second user access station during a period of time following a change from the longer transmission path to the shorter transmission path.

In a further aspect of the present invention, in accordance with its objects and purposes, the method hereof comprises a method for equalizing delay in a dynamic packet network, comprising the steps of providing first and second user access stations each having at least one buffer to delay packet transmission, and a network of switches and communication links interconnecting the first and second user access stations, setting up and changing transmission paths between the first and second user access stations across the network of switches and communication links, and controlling the buffers in the first and second user access stations to equalize packet transmission delay through the network for all of the transmission paths.

It is also preferred that the method comprise the step of controlling the buffers in the first and second user access stations to eliminate packet rate doubling when a change is made from a longer transmission path to a shorter transmission path through the network. The method also includes the step of gradually shifting a buffering from the buffer in the first user access station to the buffer in the second user access station after changing from a first longer path through the network to a second shorter path through the network.

### BRIEF DESCRIPTION OF THE DRAWINGS

The present invention will become more clearly appreciated as the disclosure of the present invention is made with reference to the accompanying drawings, wherein:
Fig. 1 is a schematic diagram providing a general overview of a conventional dynamic packet switching data network.
Fig. 2a illustrates an allocation of resources for a series of consecutive time intervals for a conventional dynamic packet switching data network.
Fig. 2b is a schematic diagram depicting the paths used during two intervals (for example) in a conventional virtual connection.
Fig. 3 is a schematic diagram showing a virtual connection that uses different paths between two users of a conventional dynamic packet switching data network.
Fig. 4a is a schematic diagram showing two paths with a common switch used in a virtual connection between two users of a conventional dynamic packet switching data network.
Fig. 4b is a schematic diagram showing two paths with separate links into a receiving user access station of a conventional dynamic packet switching data network.
Fig. 5a is a schematic diagram of a preferred embodiment of the present invention in which a buffer system is used at each user access station to equalize delay in the network.
Fig. 5b is a schematic diagram of the present invention showing two paths with separate links into a receiving user access station.
Fig. 5c is a schematic diagram of the present invention showing the delay equalizing system of the present invention used to equalize delay across three transmission paths.
Figs. 6a and 6b are flow charts of the process steps used by the present invention to equalize delay in a dynamic packet switching data network.

### DETAILED DESCRIPTION OF THE PREFERRED EMBODIMENT

Reference will now be made in detail to a preferred embodiment of the invention, an example of which is illustrated in the accompanying drawings.

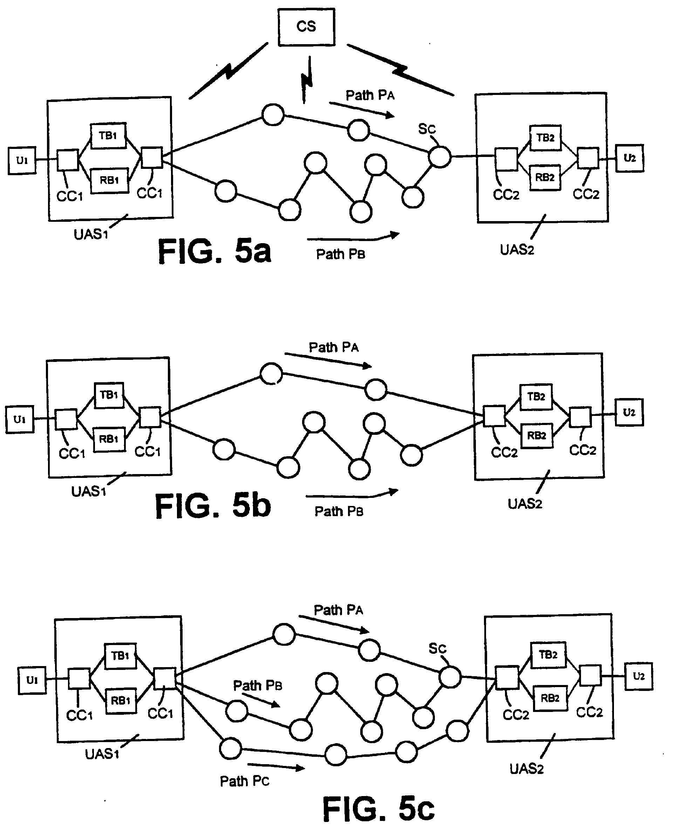

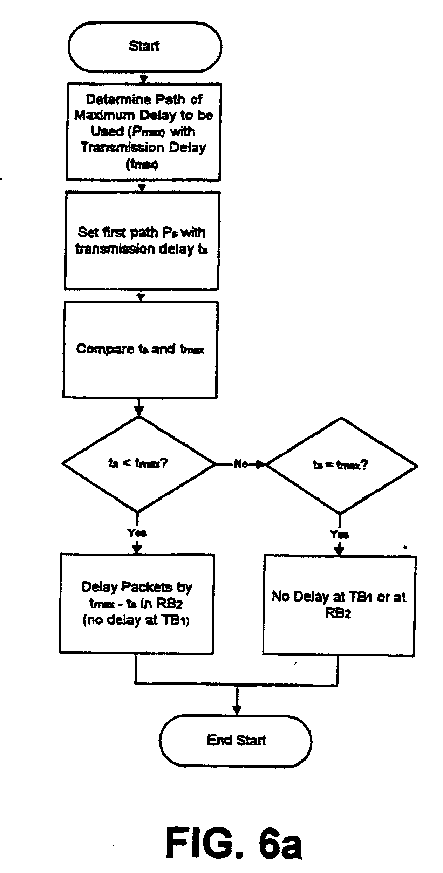

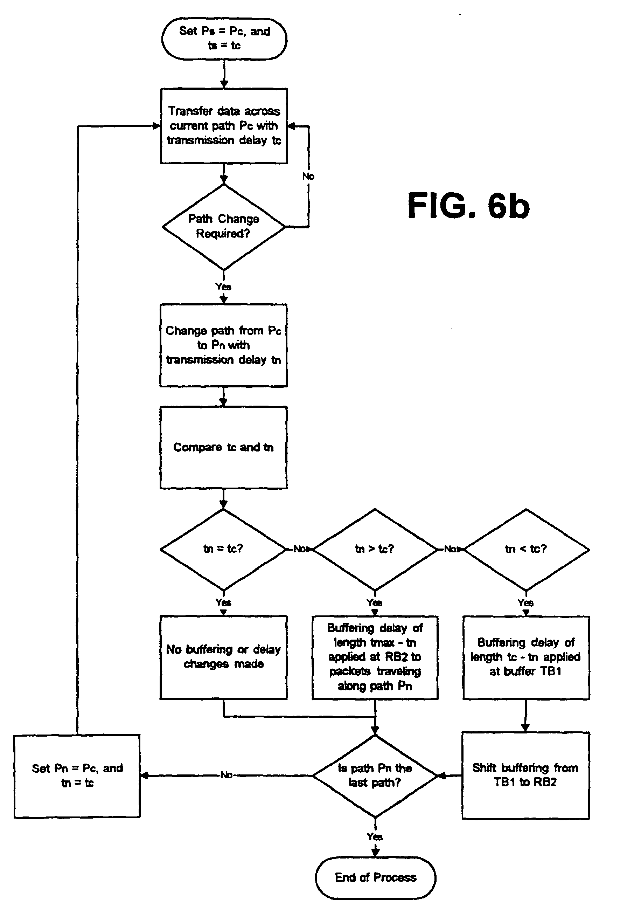

Referring to Figs. 5a, 5b, 6a, and 6b, a system and method for equalizing data packet delay through a dynamic packet switching data network will be described. The system according to the present invention will also eliminate data packet rate doubling at a common switch along two paths used by one connection or data packet rate doubling at the receiving UAS.

As shown in Figs. 5a and 5b, two buffers are used at each user access station UAS. A receive buffer RBₐ operates to delay packets so that delay is equalized to that of the longest paths used by the virtual connection. A transmit buffer TBₙ operates to eliminate data packet rate doubling when a change is made from one path to another shorter path. A control station CS having communication links to the network switches Sⱼ and the user access stations UAS functions to control the buffers and the virtual connections of the network. The communication feeds to and from the buffers TBₙ, and RBₒ are combined at cross connect elements CCₒ in each of the user access stations. The details of the buffers and their operation in the packet network are described below.

The change of a virtual connection from a path P_{A} to a longer path P_{B} will be described first. The paths can have a common switch S_{c} before the receiving user access station UAS₂ (Fig. 5a), or the paths can enter the receiving user access station UAS₂ through two links without a common switch (Fig. 5b). The connection starts, for example, using path P_{A}. Packets traveling along path P_{A} undergo a transmission delay time t, from UAS₁ to UAS₂. When the virtual connection is moved from path P_{A} to path P_{B}**,** the packets traveling along path P_{B} undergo a transmission delay time t_{b} from UAS₁, to UAS₂.

In order to equalize the transmission delay times for paths P_{A} and P_{B}, packets traveling along path P_{A} are delayed for a time t_{b} - tₐ in buffer RB₂. On the other hand, packets traveling along path P_{B} are not delayed at RB₂. After moving the virtual connection from path P_{A} to path P_{B}, the first packet for the connection traveling along path P_{B} arrives at RB₂ after the last packet traveling along path P_{A} leaves the buffer RB₂. There is no gap in the data packet stream, and transmission delay time is the same from U₁ to U₂ when paths P_{A} or P_{B} are used.

The change of a virtual connection from path P_{B} to a shorter path P_{A} will be described next. During the time the connection is using path P_{B}, the transmission delay is t_{b}, and the packets are not delayed at either TB₁ or at RB₂. When the change is made to the shorter path P_{A}, the present invention avoids packet rate doubling by delaying packets for transmission along path P_{A} for a time t_{b} - tₐ in buffer TB₁. In this way, the first packet traveling along path P_{A} will arrive at S_{c} (Fig. 5a) or at UAS₂ (Fig. 5b) after the last packet traveling along path P_{B} arrived at S_{c} or at UAS₂. This eliminates data packet rate doubling and equalizes the transmission delay times for paths P_{A} and P_{B}.

Referring to Fig. 5c, the present invention will next be described for the case where a change to a new path P_{C} longer than P_{A} is made. Assume the connection uses paths P_{B}, P_{A}, and P_{c} (in that order) with transmission delays t_{b}, tₐ, and t, respectively. Also assume, as above, that tₐ < t_{b} and that tₐ < t_{c}, < t_{b}. Path P_{B} is the path with longest delay of the three paths. When the change is made from path P_{B} to the shorter path P_{A} the procedure described above is used. As described, the packets are buffered and delayed for a time t_{b} - tₐ in the transmit buffer TB₁, but not in the receive buffer RB₂. If the system simply waits until the change is made from path P_{A} to path P_{C}, there will be a gap of time t_{c} - tₐ in the packet stream, and the total delay will be (t_{b} - tₐ) + t_{c}, which is larger than t_{b} because t_{c} - tₐ is positive.

The problem just described is avoided by shifting the buffering of packets for the virtual connection from TB₁ to RB₁ during the time that the path P_{A} is being used. In one example of the present invention, it will be assumed that each path can be used for a time period of at least 12,OOOT (e.g., 4 minutes for T = 20 milliseconds), where T is the typical transmission delay through the network. It will also be assumed that there is a maximum transmission delay of 10T (e.g., 200 milliseconds for T = 20 milliseconds) for transmission across the longest path P_{B}.

The buffering delays applied in order to equalize the total delay are equal to the transmission time differences along two paths. Buffering delays are therefore also bounded by a maximum time equal to 10T. The average number of packets transmitted for the connection in a time 12,OOOT (path P_{A} minimum active time) is 1,200 times larger than the average number of packets transmitted in a time 10T (maximum buffering delay). So the number of packets buffered at TB₁ is 1/1,200 times the number of packets the virtual connection delivers during the time period 12,000T, which is a lower bound to the period of time any one path is used, in particular, path P_{A}.

Buffering can be shifted from buffer TB₁ to RB₂ by sending packets from TB₁ to RB₂ at a rate one per thousand larger than the average for the connection. This procedure will take time 1,000 (t_{c} - tₐ) which is smaller than 10,000T and also smaller than the time path P_{A} is used. During this time packets are delayed at RB₂ for a time sufficient to make the total delay equal to t_{b}. At the start of the procedure packets are delayed by t_{b} - tₐ at TB₁ and by zero at RB₂. At the end of the procedure packets are delayed by zero at TB₁ and by t_{b} - tₐ at RB₂.

During the time period 1,000 (t_{b} - tₐ) the delay in buffer TB₁ changes linearly from t_{b} - tₐ to zero, and in buffer RB₂ the delay changes linearly from zero to t_{b} - tₐ. At the end of this buffering shift, there is no delay at buffer TB₁, and a delay of t_{b} - tₐ at RB₂ thus occurs near the end of the use of the path P_{A}. When the change is made to the path P_{c}, the transmission delay is t_{c}, which is longer than tₐ. There will now be no gap in the packet stream out of UAS₂ to user U₂. The first packet traveling along path P_{c} will arrive at the buffer RB₂ a time t_{c} - tₐ later than if it had gone along P_{A}. During this time the connection to U₂ is fed from the buffer RB₂. The delay at buffer RB₂ will be t_{b} - t_{c} for packets traveling along path P_{c}. The total transmission delay including buffering is equal to t_{b}, as mentioned above.

In order to accomplish the above delay equalizing procedure it is necessary to reserve 1/1,000 (0.1%) of the bandwidth in the network for buffer shifting.

Buffers TB₂ and RB₁ are used in an analogous way to equalize delay and eliminate gaps in the packet stream for the connection in the opposite direction. The requirement that a path must be used for at least a time 12,000T need not apply to the last path used by the connection.

Referring to Figs. 6a and 6b, the method for equalizing delay in a dynamic packet network according to the present invention will be further described as a series of process steps.

In Fig. 6a, the process steps for an initial start of the delay equalizing process are shown. The process starts by determining the path Pₘₐₓ that will be used having the maximum time delay tₘₐₓ (e.g., P_{B} and t_{b} in the example above). If the duration of the data transmission is indeterminate, the system will use the upper bound for tₘₐₓ. A first path Pₛ having a transmission delay t, is then set by the control system. If t, < tₘₐₓ, the system will delay packets by tₘₐₓ - t, in RB₂ with no delay at TB₁. If t₃ = tₘₐₓ, the system will not delay the packets at either TB₁ or at RB₂.

In Fig. 6b, the process steps for equalizing delay in the network upon switching paths are shown. When the time comes for a path change to be made, the buffering, if any, is at RB₂. The current path is P_{c} with transmission delay t_{c}, and the new path is P_{N} with transmission delay tₙ. If tₙ = t_{c}, no buffering or delay changes are made by the control system. However, if tₙ > t_{c}, a buffering delay of length tₘₐₓ - tₙ will be applied at RB₂ to packets traveling along path P_{N}. The buffering delay was tₘₐₓ - t_{c} before the change and will be tₘₐₓ - tₐ after the change. If tₙ < t_{c}, the control system will apply a buffering delay of length t_{c} - tₙ in the buffer TB₁. The system will then gradually shift the buffering from TB₁ to RB₂ using the procedure described above during the time path P_{N} is used. At the end of the buffer shifting procedure all buffering delay will be at RB₂ and will be equal to tₘₐₓ - tₙ. The total transmission delay is always tₘₐₓ.

The loop terminates during the use of the last path. If the process is in the middle of a buffer shifting procedure, there is no difficulty. The remaining packets in the network are delivered to U₂ with a constant delay equal to tₘₐₓ.

The minimum length of time that any path (except the last) can be used can be reduced as desired. For example, if the minimum time a path must be usable is 1,200T (instead of 12,OOOT) then the buffering must be shifted from TB₁ to RB₂, when necessary, 10 times as fast. This implies sending one more packet per one hundred packets during the buffering shift process. This requires 1% of available bandwidth to be reserved for this purpose. This can be carried further if more bandwidth is made available for shifting.

It will be appreciated that the present invention is not limited to the exact construction or process steps that have been described above and illustrated in the accompanying drawings, and that various modifications and changes can be made without departing from the scope thereof. It is intended that the scope of the invention only be limited by the appended claims.

## Claims

1. A system for equalizing delay in a dynamic packet switching network in which communication links between network switches come in and out of existence for limited periods of time, said network comprising;
a transmitting user access station (UAS1) and a receiving user access station (UAS2) for transmitting and receiving packets in the dynamic packet switching network ;
a plurality of network switches (Sj) between said transmitting and receiving user access stations, said switches being capable of connecting at least two transmission paths (PA, PB) between said transmitting and receiving user access stations but only one transmission path between said transmitting and receiving user access stations being used for transmitting packets at one time, and said switches being operable for changing the communication links for the transmission paths through the network ;
a transmit buffer (RB1) in said transmitting user access station and a receive buffer (RB2) in said receiving user access station for buffering packets and
control means (CS) having links to said network switches for controlling said network switches to define the transmission paths and to said user access stations for controlling said buffer means in said user ,access stations, said control means controls said receive buffer means to buffer packets being received at said receiving user access station for equalizing packet delay through the network upon changing from one transmission path to another transmission path through the network, the packets being delayed for a time period equal to the delay time associated with the transmission path having the maximum delay time,
and said system being **characterized in that** said control means controls said transmit buffer to buffer packets being transmitted from said transmitting user access station to eliminate packet doubling upon the network changing from a longer transmission path to a shorter transmission path, the packet transmission being delayed for a time period equal to the difference in delay time between a longer path delay associated with the longer transmission path and a shorter transmission path delay associated with the shorter transmission path.

2. The system according to claim 1 wherein said control means controls said transmit buffer to provide a first amount of buffering at said transmitting user access station immediately upon the changing from a longer transmission path to a shorter transmission path through the network and gradually shifts said first amount of buffering from said transmit buffer to said receive buffer during a first period,of time following the change from the longer transmission path to the shorter transmission path.

3. The system according to claim 2 wherein said shorter transmission path is used for a second period of time, said first period of time being shorter than said second period of time.

4. A method for equalizing delay in a dynamic packet switching network in which communication links between network switches come in and out of existence for limited periods of time, said network including a transmitting user access station (UAS1) having a transmit buffer and a receiving user access station (UAS2) having a receive buffer and a plurality of switches (Sj) configurable into at least two transmission paths interconnecting the transmit and receive user access stations, but only one transmission path interconnecting the transmitting and receiving user access stations being used for transmitting packets at a time:, said method comprising the steps of setting up and changing transmission paths between said transmitting and receiving user stations through the switches ;
determining transmission delay times for transmission paths between the transmitting and receiving user access stations;
controlling the receive buffer to equalize packet transmission delay through the network for all of the transmission paths, the packet transmission being delayed for a variable period of time by said receive buffer depending on the transmission delay time determined for the transmission path with the longest transmission delay time and based upon relative delay limes among changing transmission paths,
and said method being **characterized by** further comprising the step of controlling the transmit buffer to eliminate packet rate doubling when a change is made from a longer transmission path to a shorter transmission path through the network, the packet transmission being delayed for a period of time equal to the difference in delay time between a longer transmission delay time associated with the longer transmission path and a shorter transmission delay time associated with the shorter transmission path.

5. The method according to claim 4 further comprising the step of shifting buffering from the transmit buffer to the receive buffer after the first path through the network is changed to a second path through the network that is shorter than the first path.

6. The method according to claim 5 further comprising the step of controlling the receive buffer to delay packets received from the transmitting user access station for a sufficient time to cause a total transmission delay for each transmission path equal to the transmission delay time of the longest one of the transmission paths.

## Patentansprüche

1. System zum Entzerren einer Verzögerung in einem dynamischen Paketschaltnetzwerk, in welchem Kommunikationsverbindungen zwischen Netzwerkschaltern für begrenzte Zeitperioden entstehen und nicht weiterbestehen, wobei das Netzwerk Folgendes aufweist:
eine sendende Anwenderzugangsstation (UAS1) und eine empfangende Anwenderzugangsstation (UAS2) zum Senden und Empfangen von Paketen im dynamischen Paketschaltnetzwerk;
eine Vielzahl von Netzwerkschaltern (Sj) zwischen den sendenden und empfangenden Anwenderzugangsstationen, wobei die Schalter wenigstens zwei Übertragungspfade (PA, PB) zwischen den sendenden und empfangenden Anwenderzugangsstationen verbinden können, aber nur einen Übertragungspfad zwischen den sendenden und empfangenden Anwenderzugangsstationen zum Senden von Paketen zu einem Zeitpunkt verwendet wird, und wobei die Schalter zum Ändern der Kommunikationsverbindungen für die Übertragungspfade durch das Netzwerk betätigbar sind;
einen Sendepuffer (RB1) in der sendenden Anwenderzugangsstation und einen Empfangspuffer (RB2) in der empfangenden Anwenderzugangsstation zum Puffern von Paketen, und
eine Steuereinrichtung (CS) mit Verbindungen zu den Netzwerkschaltern zum Steuern der Netzwerkschalter, um die Übertragungspfade zu definieren, und zu den Anwenderzugangsstationen zum Steuern der Puffereinrichtungen in den Anwenderzugangsstationen, wobei die Steuereinrichtung die Empfangspuffereinrichtung steuert, um Pakete zu puffern, die bei der empfangenden Anwenderzugangsstation empfangen werden, zum Entzerren einer Paketverzögerung durch das Netzwerk auf eine Änderung von einem Übertragungspfad zu einem anderen Übertragungspfad durch das Netzwerk hin, wobei die Pakete für eine Zeitperiode gleich der Verzögerungszeit, die zu dem Übertragungspfad mit der maximalen Verzögerungszeit gehört, verzögert werden,
und wobei das System **dadurch gekennzeichnet ist, dass** die Steuereinrichtung den Sendepuffer steuert, um Pakete, die von der sendenden Anwenderzugangsstation gesendet werden, zu puffern, um eine Paketverdoppelung daraufhin zu eliminieren, dass sich das Netzwerk von einem längeren Übertragungspfad zu einem kürzeren Übertragungspfad ändert, wobei die Paketübertragung für eine Zeitperiode gleich der Differenz bezüglich einer Verzögerungszeit zwischen einer längeren Pfadverzögerung, die zu dem längeren Übertragungspfad gehört, und einer kürzeren Übertragungspfadverzögerung, die zu dem kürzeren Übertragungspfad gehört, verzögert wird.

2. System nach Anspruch 1, wobei die Steuereinrichtung den Sendepuffer steuert, um ein erstes Ausmaß einer Pufferung bei der sendenden Anwenderzugangsstation direkt auf die Änderung von einem längeren Übertragungspfad zu einem kürzeren Übertragungspfad durch das Netzwerk zur Verfügung zu stellen, und das erste Ausmaß an Pufferung während einer ersten Zeitperiode nach der Änderung von dem längeren Übertragungspfad zu dem kürzeren Übertragungspfad nach und nach vom Sendepuffer zum Empfangspuffer verschiebt.

3. System nach Anspruch 2, wobei der kürzere Übertragungspfad für eine zweite Zeitperiode verwendet wird, wobei die erste Zeitperiode kürzer als die zweite Zeitperiode ist.

4. Verfahren zum Entzerren einer Verzögerung in einem dynamischen Paketschaltnetzwerk, in welchem Kommunikationsverbindungen zwischen den Netzwerkschaltern für begrenzte Zeitperioden entstehen und nicht weiterbestehen, wobei das Netzwerk eine sendende Anwenderzugangsstation (UAS1) mit einem Sendepuffer und eine empfangende Anwenderzugangsstation (UAS2) mit einem Empfangspuffer und eine Vielzahl von Schaltern (Sj), die in wenigstens zwei Übertragungspfade konfigurierbar sind, die die Sende- und die Empfangs-Anwenderzugangsstation miteinander verbinden, wobei aber nur ein Übertragungspfad die sendende und die empfangende Anwenderzugangsstation miteinander verbindet, die zum Übertragen von Paketen zu einer Zeit verwendet werden, enthält, wobei das Verfahren die folgenden Schritte aufweist:
Einrichten und Ändern von Übertragungspfaden zwischen den sendenden und empfangenden Anwenderstationen durch die Schalter;
Bestimmen von Übertragungsverzögerungszeiten für Übertragungspfade zwischen den sendenden und empfangenden Anwenderzugangsstationen;
Steuern des Empfangspuffers, um eine Paketübertragungsverzögerung durch das Netzwerk für alle Übertragungspfade zu entzerren, wobei die Paketübertragung für eine variable Zeitperiode durch den Empfangspuffer in Abhängigkeit von der Übertragungsverzögerungszeit verzögert wird, die für den Übertragungspfad mit der längsten Übertragungsverzögerungszeit bestimmt ist und auf relativen Übertragungsverzögerungszeiten unter sich ändernden Übertragungspfaden basiert,
und wobei das Verfahren **dadurch gekennzeichnet ist, dass** es weiterhin den Schritt zum Steuern des Sendepuffers aufweist, um eine Paketratenverdopplung zu eliminieren, wenn eine Änderung von einem längeren Übertragungspfad zu einem kürzeren Übertragungspfad durch das Netzwerk durchgeführt wird, wobei die Paketübertragung für eine Zeitperiode gleich der Differenz bezüglich einer Verzögerungszeit zwischen einer längeren Übertragungsverzögerungszeit, die zu dem längeren Übertragungspfad gehört, und einer kürzeren Übertragungsverzögerungszeit, die zu dem kürzeren Übertragungspfad gehört, verzögert wird.

5. Verfahren nach Anspruch 4, das weiterhin den Schritt zum Verschieben einer Pufferung vom Sendepuffer zum Empfangspuffer aufweist, nachdem der erste Pfad durch das Netzwerk zu einem zweiten Pfad durch das Netzwerk, der kürzer als der erste Pfad ist, geändert ist.

6. Verfahren nach Anspruch 5, das weiterhin den Schritt zum Steuern des Empfangspuffers zum Verzögern von Paketen, die von der sendenden Anwenderzugangsstation empfangen sind, für eine ausreichende Zeit aufweist, um eine gesamte Übertragungsverzögerung für jeden Übertragungspfad gleich der Übertragungsverzögerungszeit des längsten der Übertragungspfade zu verursachen.

## Revendications

1. Système pour compenser le temps de propagation dans un réseau dynamique à commutation de paquets, dans lequel des liaisons de télécommunications entre des commutateurs de réseau acquièrent, et perdent, une existence, pendant des périodes de temps limitées, ledit réseau comprenant :
une station d'accès d'utilisateur de transmission (UAS1), et une station d'accès d'utilisateur de réception (UAS2), pour transmettre et recevoir des paquets dans le réseau dynamique à commutation de paquets ;
une pluralité de commutateurs de réseau (Sj) entre lesdites stations d'accès d'utilisateur de transmission et de réception, lesdits commutateurs étant aptes à connecter au moins deux voies de transmission (PA, PB) entre lesdites stations d'accès d'utilisateur de transmission et de réception, mais uniquement une voie de transmission entre lesdites stations d'accès d'utilisateur de transmission et de réception étant utilisée afin de transmettre des paquets à un moment donné, et lesdits commutateurs étant utilisables pour changer les liaisons de communication pour les voies de transmission à travers le réseau ;
un tampon de transmission (RB1) dans ladite station d'accès d'utilisateur de transmission, et un tampon de réception (RB2) dans ladite station d'accès d'utilisateur de réception, pour mettre en tampon des paquets ; et
des moyens de commande (CS) ayant des connexions avec lesdits commutateurs de réseau pour commander aux dits commutateurs de réseau de définir les voies de transmission, et ayant des connexions avec lesdites stations d'accès d'utilisateur pour commander lesdits moyens de mise en tampon dans lesdites stations d'accès d'utilisateur, lesdits moyens de commande commandent aux dits moyens de mise en tampon de réception de mettre en tampon des paquets qui ont été reçus au niveau de ladite station d'accès d'utilisateur de réception de façon à compenser le temps de propagation de paquets à travers le réseau lors du changement d'une voie de transmission à une autre voie de transmission à travers le réseau, les paquets étant retardés sur une période de temps égale au temps de propagation associé à la voie de transmission qui a le temps de propagation maximum ;
et ledit système étant **caractérisé en ce que** lesdits moyens de commande commandent au dit tampon de transmission de mettre en tampon des paquets qui sont transmis à partir de ladite station d'accès d'utilisateur de transmission de façon à éliminer des paquets en double lors du changement de réseau d'une voie de transmission plus longue à une voie de transmission plus courte, la transmission par paquets étant retardée sur une période de temps égale à la différence dans le temps de propagation entre un retard de transmission plus long associé à la voie de transmission plus longue et un retard de transmission plus court associé à la voie de transmission plus courte.

2. Système selon la revendication 1, dans lequel lesdits moyens de commande commandent au dit tampon de transmission de procurer une première quantité de mise en tampon au niveau de ladite station d'accès d'utilisateur de transmission immédiatement après le changement d'une voie de transmission plus longue à une voie de transmission plus courte à travers le réseau, et décalent progressivement ladite première quantité de mise en tampon depuis ledit tampon de transmission vers ledit tampon de réception au cours d'une première période de temps consécutive au changement de la voie de transmission plus longue à la voie de transmission plus courte.

3. Système selon la revendication 2, dans lequel ladite voie de transmission plus courte est utilisée au cours d'une deuxième période de temps, ladite première période de temps étant plus courte que ladite deuxième période de temps.

4. Procédé pour compenser le temps de propagation dans un réseau dynamique à commutation de paquets, dans lequel des liaisons de télécommunications entre des commutateurs de réseau acquièrent, et perdent, une existence, pendant des périodes de temps limitées, ledit réseau comprenant une station d'accès d'utilisateur de transmission (UAS1) ayant un tampon de transmission, et une station d'accès d'utilisateur de réception (UAS2) ayant un tampon de réception, et une pluralité de commutateurs (Sj) qui sont configurables en au moins deux voies de transmission qui assurent la connexion entre les stations d'accès d'utilisateur de transmission et de réception, mais dans lequel uniquement une voie de transmission qui assure la connexion entre les stations d'accès d'utilisateur de transmission et de réception est utilisée pour transmettre des paquets à un moment donné, ledit procédé comprenant les étapes consistant à définir et à changer des voies de transmission entre lesdites stations d'utilisateur de transmission et de réception par le biais des commutateurs ;
déterminer des temps de retard de transmission pour les voies de transmission entre les stations d'accès d'utilisateur de transmission et de réception ;
commander au tampon de réception de compenser le temps de retard de transmission de paquets à travers le réseau pour la totalité des voies de transmission, la transmission par paquets étant retardée sur une période de temps variable par ledit tampon de réception en fonction du temps de retard de transmission déterminé pour la voie de transmission avec le temps de retard de transmission le plus long, et en se basant sur des temps de propagation relatifs entre des voies de transmission changeantes ;
et ledit procédé étant **caractérisé en ce qu'**il comprend en outre l'étape consistant à commander au tampon de transmission d'éliminer un doublage de taux de paquets quand un changement est fait entre une voie de transmission plus longue à une voie de transmission plus courte à travers le réseau, la transmission de paquets étant retardée sur une période de temps égale à la différence dans le temps de propagation entre un retard de transmission plus long associé à la voie de transmission plus longue et un retard de transmission plus court associé à la voie de transmission plus courte.

5. Procédé selon la revendication 4 comprenant en outre l'étape consistant à décaler la mise en tampon depuis le tampon de transmission vers le tampon de réception après que la première voie de transmission à travers le réseau a été changée à une deuxième voie de transmission à travers le réseau qui est plus courte que la première voie de transmission.

6. Procédé selon la revendication 5 comprenant en outre l'étape consistant à commander au tampon de réception de retarder des paquets qui ont été reçus depuis la station d'accès d'utilisateur de transmission pendant une période de temps suffisante pour amener un retard de transmission total pour chaque voie de transmission à être égal au temps de retard de transmission de la plus longue des voies de transmission.
